(19) Europäisches Patentamt
European Patent Office
Office européen des brevets

(11) **EP 4 402 371 B1**

(12) **EUROPÄISCHE PATENTSCHRIFT**

(45) Veröffentlichungstag und Bekanntmachung des Hinweises auf die Patenterteilung:
**13.08.2025   Patentblatt 2025/33**

(21) Anmeldenummer: **22772496.0**

(22) Anmeldetag: **01.09.2022**

(51) Internationale Patentklassifikation (IPC):
*F04B 1/295* (2020.01)       *F04B 1/328* (2020.01)
*F04B 49/06* (2006.01)       *F16H 61/4008* (2010.01)
*F16H 61/4017* (2010.01)     *F16H 61/431* (2010.01)
*F16H 61/472* (2010.01)

(52) Gemeinsame Patentklassifikation (CPC):
**F04B 49/065; F04B 1/295; F04B 1/328; F16H 61/4008; F16H 61/4017; F16H 61/431; F16H 61/472;** F16H 2059/6869

(86) Internationale Anmeldenummer:
**PCT/EP2022/074345**

(87) Internationale Veröffentlichungsnummer:
**WO 2023/041342 (23.03.2023 Gazette 2023/12)**

(54) **VERFAHREN FÜR EINEN HYDRAULISCHEN ANTRIEB, STEUEREINHEIT, COMPUTERPROGRAMM, UND MASCHINENLESBARES SPEICHERMEDIUM**

METHOD FOR A HYDRAULIC DRIVE, CONTROL UNIT, COMPUTER PROGRAM, AND MACHINE-READABLE STORAGE MEDIUM

PROCÉDÉ POUR UN ENTRAÎNEMENT HYDRAULIQUE, UNITÉ DE COMMANDE, PROGRAMME INFORMATIQUE ET SUPPORT D'ENREGISTREMENT LISIBLE PAR MACHINE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **14.09.2021   DE 102021210117**

(43) Veröffentlichungstag der Anmeldung:
**24.07.2024   Patentblatt 2024/30**

(73) Patentinhaber: **Robert Bosch GmbH**
**70442 Stuttgart (DE)**

(72) Erfinder:
• **JOECHLE, Ralf**
**89081 Ulm (DE)**
• **VOELK, Peter**
**89073 Ulm (DE)**
• **SPANG, Joerg**
**89233 Neu-Ulm (DE)**

(56) Entgegenhaltungen:
DE-A1- 102012 020 632     DE-A1- 102013 217 708
DE-A1- 102015 222 988     DE-A1- 4 425 130

**Beschreibung**

Technisches Gebiet

Die vorliegende Erfindung betrifft ein Verfahren für einen hydraulischen Antrieb, eine Steuereinheit, ein Computerprogramm und ein computerlesbares Speichermedium.

Stand der Technik

Bekannte mengengesteuerte hydraulische Antriebe werden üblicherweise mit hydrostatischen Pumpen mit einer hydraulisch-mechanischen Regelung einer das Fördervolumen bestimmenden Größe realisiert. Letztgenannte ist von der Bauweise abhängig. Im Falle einer Axialkolbenmaschine in Schrägscheibenbauweise ist es beispielsweise ein Schwenkwinkel der Schrägscheibe. Diese herkömmliche Regelung des Schwenkwinkels, basierend auf der Winkelerfassung mittels eines Sensors, bietet den Vorteil einer hohen Fördervolumen- und damit Mengengenauigkeit gegenüber einer druckgeregelten Pumpe. Allerdings ist damit eine einfache Möglichkeit der Druckregelung nicht mehr möglich, sodass eine Mengensteuerung bzw. Schwenkwinkelregelung zusammen mit einer Druckregelung bei herkömmlich hydraulisch-mechanisch schwenkwinkelgeregelten Pumpen nur über eine aufwändige Erweiterung der Ansteuerung realisiert werden kann.

So sind beispielsweise aus der DE 10 2015 207 258 A1, der DE 10 2013 213 896 A1 und der DE 10 2013 217 708 A1 hydraulische Antriebe bekannt, bei denen zur Regelung eines Drehmoments ein Solldruck ermittelt wird und der Antrieb nach dem Druck geregelt wird.

Die DE 10 2019 210 003 A1 offenbart ein Verfahren, einen vorgegebenen Schwenkwinkel in einen Druck, genauer gesagt in eine Soll-Trajektorie des Drucks, umzurechnen und eine hydraulische Maschine nach dem Druck zu regeln. All diese Offenbarungen haben gemeinsam, dass nicht nach einem vorgegebenen Volumenstrom, sondern nur nach dem Sollschwenkwinkel oder dem Druck als Regelgröße geregelt wird.

Die offenbarten Hydromaschinen sind druckgeregelt, können aber keinen konstanten Volumenstrom ausgeben. Die Vorgabe des Differenzdrucks oder des festen Schwenkwinkels führen dazu, dass sich der ausgegebene Volumenstrom der Hydraulikpumpe unter der Einwirkung von äußeren Kräften/ Lasten bzw. Umweltbedingungen (beispielsweise der Temperatur) ändert. Die beschriebene Änderung des ausgegebenen Volumenstroms mag nicht in allen Situationen gewollt sein, beispielsweise, wenn einem Verbraucher eine konstante Volumenstrommenge zur Verfügung gestellt werden soll. **Ein** ähnlicher Stand der Technik ist durch DE102012020632 offenbart. Hier wird eine Volumenstromregelung, jedoch keine Druckregelung offenbart.

Der vorliegenden Erfindung liegt daher die Aufgabe zugrunde, ein Verfahren mit einem hydraulischen Antrieb mit einer mit verstellbarem Verdrängungsvolumen ausgestalteten und orientiert an einer Last eines Verbrauchers elektronisch regelbaren Hydromaschine zu schaffen, mit dem die Hydromaschine sowohl gemäß einem angeforderten Volumenstrom, als auch nach einer weiteren Betriebsgröße der Hydromaschine geregelt werden kann. Weitere Aufgabe sind, eine Steuereinheit zu schaffen, die eingerichtet ist, dieses Verfahren auszuführen, ein Computerprogramm zu schaffen, welches einen Prozessor mit Hardware zur Ausführung von Schritten des Verfahrens veranlasst, und zuletzt ein maschinenlesbares Speichermedium mit dem darauf gespeicherten Computerprogramm zu schaffen.

Die erste Aufgabe wird durch ein Verfahren mit den Merkmalen des Anspruchs 1 gelöst.

Die weiteren Aufgaben werden gelöst durch den den Anspruch 10, den Anspruch 12 und den Anspruch 13. Vorteilhafte Weiterbildungen der jeweiligen Erfindung sind Gegenstand der jeweils abhängigen Unteransprüche.

Die vorliegende Erfindung betrifft ein Verfahren, das mit einem hydraulischen Antrieb vorgesehen ist. Dieser hat wenigstens eine Hydromaschine mit verstellbarem Verdrängungsvolumen, die zur Druckmittelversorgung wenigstens eines hydraulischen Verbrauchers vorgesehen ist. An dessen Last - insbesondere Lastdruck - orientiert, ist die Hydromaschine elektronisch regelbar. Ein Regelkreis oder Regler der Hydromaschine ist somit nicht "klassisch" hydraulisch-mechanisch ausgebildet, sondern basiert auf einer allein elektronischen Signalverarbeitung im Regelkreis. Aus dem Hause der Anmelderin sind solche Hydromaschinen als "Electronified" klassifiziert und können im offenen oder im geschlossenen Kreis mit dem wenigstens einen Verbraucher verbunden sein. Das Verfahren weist dabei folgende Schritte auf:

Erfassen einer Ist-Drehzahl und eines Soll-Volumenstroms, jeweils der Hydromaschine; und

Berechnen eines Soll-Verdrängungsvolumens der Hydromaschine oder eines mechanischen Soll-Äquivalents dessen, insbesondere eines Schwenkwinkels, in Abhängigkeit der Ist-Drehzahl und des Soll-Volumenstroms.

In Abhängigkeit des Soll-Verdrängungsvolumens oder mechanischen Soll-Äquivalents, sowie in Abhängigkeit wenigstens eines Parameters des Antriebes oder in Abhängigkeit wenigstens einer Messgröße des Antriebes erfolgt wahlweise einer der Schritte:

Regeln des Verdrängungsvolumens gemäß dem Soll-Verdrängungsvolumen oder mechanischen Soll-Äquivalent und Limitieren einer Betriebsgröße der Hydromaschine in Abhängigkeit des wenigstens einen Parameters oder;

Steuern des Verdrängungsvolumens gemäß dem Soll-Verdrängungsvolumen oder mechanischen Soll-Äquivalent und Regeln einer Betriebsgröße der Hydromaschine in Abhängigkeit der wenigstens einen Messgröße.

Der wenigstens eine Parameter ist beispielsweise ein Begrenzungsparameter, der einen maximalen Druck oder Differenzdruck, ein maximales Drehmoment oder eine maximale Leistung der Hydropumpe oder dergleichen definiert. Die wenigstens eine Messgröße des Antriebes ist nach der Erfindung der Druck oder Differenzdruck der Hydropumpe.

Im Verfahren wird somit der Soll-Volumenstrom vorgegeben, der mittels der aktuellen Drehzahl in das Soll-Verdrängungsvolumen oder dessen Soll-Äquivalent umgerechnet wird. Ein oder mehrere charakteristische Parameter des Antriebes wird/werden übernommen und die eine oder mehreren Messgrößen wird/werden erfasst. Die Ansteuerung der Hydromaschine weist erfindungsgemäß zwei alternative Modi auf. Im ersten wird das Verdrängungsvolumen oder Äquivalent in Abhängigkeit des Soll-Verdrängungsvolumens oder Soll-Äquivalents geregelt und die Betriebsgröße der Hydromaschine wird in Abhängigkeit des wenigstens einen Parameters limitiert, insbesondere um den Antrieb vor Überlastung zu schützen. In dem anderen Modus wird das Verdrängungsvolumen oder Äquivalent gemäß dem Soll-Verdrängungsvolumen oder Soll-Äquivalent gesteuert und die Betriebsgröße der Hydromaschine wird in Abhängigkeit der wenigstens einen Messgröße geregelt.

Eine Stellgröße der Hydromaschine ist ihr verstellbares Verdrängungsvolumen. Das zugehörige Stellglied ist beispielsweise eine in ihrem Schwenkwinkel verstellbare Schrägscheibe oder Schrägachse der Hydromaschine, wobei der Schwenkwinkel das mechanische Äquivalent zum Verdrängungsvolumen ist. Da es nicht möglich ist, mit nur einem Stellglied zwei Betriebsgrößen, also das Verdrängungsvolumen und die andere Betriebsgröße, zu regeln, wird die Betriebsgröße limitiert, wenn das Verdrängungsvolumen geregelt wird. Andersherum wird das Verdrängungsvolumen gesteuert, wenn die Betriebsgröße geregelt wird.

In einer Weiterbildung des Verfahrens wird das Soll-Verdrängungsvolumen oder Soll-Äquivalent in Abhängigkeit der wenigstens einen Messgröße in einen Soll-Stellstrom zur Ansteuerung der Hydromaschine umgerechnet.

Im oben genannten zweiten Modus ist eine Steuerung des Verdrängungsvolumens und damit des Volumenstroms mit einer unterlagerten Regelung nach der Betriebsgröße realisiert. Dadurch ist die Regelung nach der Betriebsgröße bei konstantem Volumenstrom realisierbar.

Der wenigstens eine Parameter des Antriebes ist beispielsweise eine Kennzahl, die eine Limitierung der Betriebsgröße angibt. Wenn der Parameter über- oder unterschritten wird, dann wird die Ansteuerung des Verdrängungsvolumens überschrieben oder übersteuert.

Das Erfassen der Messgröße kann sensorisch durch eine geeignete Sensoreinheit erfolgen, oder es erfolgt durch Übergabe von einer neben-, unter- oder übergeordneten Steuereinheit. Im Falle der Ist-Drehzahl kann dies beispielsweise durch ein Steuergerät einer Antriebsmaschine erfolgen, über die die Hydromaschine antreibbar ist.

Für das Verdrängungsvolumen kann alternativ eine dem Verdrängungsvolumen zugrundeliegende Größe der Hydromaschine, also das mechanische Äquivalent des Verdrängungsvolumens, verwendet werden, die/das insbesondere von der Bauart der Hydromaschine abhängt. Im Falle der Ausgestaltung als Axialkolbenmaschine mit verstellbarer Schrägscheibe oder -achse ist dies beispielsweise ein Schwenkwinkel der Schrägscheibe oder -achse. Im Folgenden kann das Verdrängungsvolumen durch den Schwenkwinkel ersetzt werden und andersherum.

Nach einem weiteren Merkmal der Erfindung wird das Soll-Verdrängungsvolumen in die Betriebsgröße der Hydromaschine umgerechnet und die Betriebsgröße wird limitiert, wenn das Verdrängungsvolumen geregelt wird. Die Betriebsgröße wird geregelt, wenn das Verdrängungsvolumen gesteuert wird.

Das Soll-Verdrängungsvolumen wird in einen Sollwert der Betriebsgröße umgerechnet. Wenn die Betriebsgröße geregelt wird, ist der Sollwert die Führungsgröße der Regelung. Die wenigstens eine Messgröße ist die Rückführung und der Stellstrom der Hydromaschine die Regelgröße der Regelung. Also überführt die Regelung nach der Betriebsgröße den Sollwert der Betriebsgröße in Abhängigkeit der wenigstens einen Messgröße in den Stellstrom.

Die Umrechnung des Verdrängungsvolumens in die Betriebsgröße, insbesondere den Druck, hat den Vorteil, dass keine Sensorik nötig ist, die das Verdrängungsvolumen erfasst. Der einzig nötige Sensor ist die Erfassung der wenigstens einen Messgröße. Durch die Ersparnis des Sensors für das Verdrängungsvolumen können Kosten eingespart werden.

Nach einem weiteren Merkmal der Erfindung ist die Betriebsgröße ein Druck, den die Hydromaschine bereitstellt und die Regelung ist eine Druckregelung, die den Druck der Hydromaschine in Abhängigkeit eines Soll-Drucks und der Messgröße regelt.

Das Soll-Verdrängungsvolumen wird in den Soll-Druck umgerechnet. Der Soll-Druck ist dann die Führungsgröße der Druckregelung. Die wenigstens eine Messgröße ist in diesem Fall beispielsweise ein Ist-Druck der Hydromaschine. Die Druckregelung überführt also einen Soll-Druck in Abhängigkeit des Ist-Drucks als Rückführung in den Stellstrom. Es wird also eine unterlagerte Druckregelung für die Hydromaschine realisiert.

Das Soll-Verdrängungsvolumen wird beispielsweise in eine Soll-Trajektorie des Drucks umgerechnet, die einen zeitlichen Zusammenhang zwischen dem Verdrängungsvolumen und dem Druck abbildet. Hierbei können zur Verfeinerung der Ansteuerung ergänzend Zeitableitungen der Soll-Trajektorie ermittelt werden.

Die Hydromaschine kann druckgeregelt betrieben werden, während ein konstanter Volumenstrom durch die Verdrängungsvolumensteuerung bereitgestellt wird. Es wird also eine Mengensteuerung, bzw. eine Winkelregelung mit einer druckgeregelten Hydromaschine realisiert. Ein Drucksensor ist in bekannten hydraulischen Antrieben standardmäßig verbaut. Durch den Ist-Druck als Messgröße fallen also keine Mehrkosten an der Sensorik des hydraulischen Antriebs an. Ferner können durch die Umrechnung des Verdrängungsvolumens in den Druck Drucklimitierungen einfach eingehalten werden.

Bei der Betriebsgröße der Hydromaschine muss es sich nicht zwangsläufig um den Druck handeln. Vielmehr kann es sich auch um ein Drehmoment, eine Leistung oder um einen Strom handeln.

Nach einem weiteren Merkmal der Erfindung umfasst die Berechnung des Soll-Verdrängungsvolumens auf Basis des Soll-Volumenstroms und der Ist-Drehzahl die folgenden Schritte. Erstens Berechnen eines theoretischen Volumenstroms aus dem Soll-Volumenstrom, der Ist-Drehzahl und einem maximalen Pumpenfördervolumen und Berechnen eines Verdrängungsvolumens mittels des berechneten Volumenstroms, der aktuellen Pumpendrehzahl und des maximalen Pumpenfördervolumens.

Der Soll-Volumenstrom, der beispielsweise aus einer Bewegungsanforderung an den wenigstens einen hydraulischen Verbraucher resultiert, muss von der Hydropumpe bereitgestellt werden. Der Volumenstrom wird jedoch nicht direkt, sondern in Abhängigkeit des berechneten Soll-Verdrängungsvolumens geregelt bzw. gesteuert. Durch diese Umrechnung wird die Volumenstromvorgabe in eine Größe umgerechnet, in deren Abhängigkeit leicht geregelt bzw. gesteuert werden kann, da mit dem Schwenkwinkel der Hydromaschine die zugehörige Stellgröße verfügbar ist.

Nach einem weiteren Merkmal der Erfindung wird eine Gesamtabweichung vom theoretischen Volumenstrom berechnet. Die Gesamtabweichung resultiert aus einem oder mehreren Einflüssen, die auf den Volumenstrom wirken. Zu den Einflüssen mit großer Wirkung zählen insbesondere der Druck, die Drehzahl und/ oder der Schwenkwinkel.

In einer bevorzugten Weiterbildung wird die Gesamtabweichung daher als Summe einer hochdruckabhängigen Volumenstromabweichung, einer drehzahlabhängigen Volumenstromabweichung und einer schwenkwinkelabhängigen Volumenstromabweichung ermittelt.

Nach einem weiteren Merkmal der Erfindung wird aus dem theoretischen Volumenstrom und der Gesamtabweichung ein modifizierter Soll-Volumenstrom berechnet und der modifizierte Soll-Volumenstrom wird in das modifizierte Verdrängungsvolumen umgerechnet.

Durch die Berechnung der Gesamtabweichung ausgehend vom theoretischen Volumenstrom kann ein modifizierter Volumenstrom berechnet werden. Der modifizierte Volumenstrom ist die Summe aus dem theoretischen Volumenstrom und der Gesamtabweichung. Durch Umrechnen des modifizierten Volumenstroms in das modifizierte Verdrängungsvolumen kann das Verdrängungsvolumen genauer bestimmt werden als es durch die Umrechnung vom theoretischen Volumenstrom in das Verdrängungsvolumen möglich ist. Durch eine möglichst genaue Berechnung des Verdrängungsvolumens in Abhängigkeit der störenden Einflüsse kann das Verdrängungsvolumen möglichst genau gesteuert werden. Das berechnete Verdrängungsvolumen ist die Eingangsgröße für die Regelung bzw. Steuerung in Abhängigkeit des Verdrängungsvolumens. Abweichungen zwischen dem berechneten Verdrängungsvolumen und dem tatsächlichen Verdrängungsvolumen resultieren also in einer ungenaueren Ansteuerung der Hydromaschine.

Nach einem weiteren Merkmal der Erfindung wird das berechnete Soll-Verdrängungsvolumen mittels einer erfassten Messgröße korrigiert. Wenn eine hohe Genauigkeit gefordert wird, wird das vorstehend berechnete Soll-Verdrängungsvolumen durch eine Verdrängungsvolumenregelung korrigiert. Dazu wird eine Messgröße erfasst. Anhand dieser erfassten Messgröße wird das Verdrängungsvolumen korrigiert bzw. geregelt. Die Messgröße kann beispielsweise der Schwenkwinkel der Hydromaschine sein. Wenn der Schwenkwinkel erfasst wird und als die Messgröße in die Verdrängungsvolumenregelung zurückgeführt wird, ist die Korrektur des Verdrängungsvolumens eine Schwenkwinkelregelung.

Die Verdrängungsvolumenregelung weist einen Kostennachteil gegenüber einem hydraulischen Antrieb ohne die Verdrängungsvolumenregelung auf, da ein Sensor zum Erfassen der Messgröße, in diesem Fall beispielsweise der Schwenkwinkel, benötigt wird. Die Verdrängungsvolumenregelung ermöglich aber eine genauere Ansteuerung der Hydromaschine. Durch die Verdrängungsvolumenregelung werden Störeinflüsse wie beispielsweise Lastsprünge und/oder (Modell-)Ungenauigkeiten besser kompensiert als ohne die Verdrängungsvolumenregelung. Dadurch wird eine genauere Bereitstellung des gewünschten Volumenstromes ermöglicht.

Durch die Verdrängungsvolumenregelung lassen sich auch weitere Funktionen in dem hydraulischen Antrieb realisieren.

Nach einem weiteren Merkmal der Erfindung regelt eine innere Regelschleife in Abhängigkeit der Betriebsgröße der Hydromaschine und eine äußere Regelschleife regelt das Verdrängungsvolumen. Dabei bilden die beiden Regelschleifen eine Kaskadenregelung.

Die äußere Regelschleife regelt das Verdrängungsvolumen. Das geregelte bzw. korrigierte Verdrängungsvolumen ist die Eingangsgröße für die Regelung der Betriebsgröße. Vorzugsweise handelt es sich dabei um die Druckregelung. Die Druckregelung rechnet das korrigierte Verdrängungsvolumen in den Soll-Druck um und regelt den Druck in Abhängigkeit des Soll-Drucks und der wenigstens einen Messgröße. Bei der wenigstens einen Messgröße handelt es sich vorzugsweise um den Ist-Druck.

Die kaskadierte Regelung erlaubt es, Vorgaben und Beschränkungen für den Volumenstrom, den Schwenkwinkel und den Druck gleichzeitig einzuhalten.

Nach einem weiteren Merkmal der Erfindung wird zwischen einem Betriebsmodus mit einer Druckregelung und einem weiteren Betriebsmodus mit einer Verdrängungsvolumenregelung umgeschaltet. Bei manchen Anwendungen ist es gewünscht zwischen dem Betriebsmodus mit einer Druckregelung und dem weiteren Betriebsmodus mit einer Verdrängungsvolumenregelung umschalten zu können. Durch die Verdrängungsvolumenregelung ist es möglich in dem einen Betriebsmodus nach dem Druck und in dem weiteren Betriebsmodus nach dem Verdrängungsvolumen bzw. dem Schwenkwinkel der Hydromaschine zu regeln.

Nach einem weiteren Merkmal der Erfindung werden durch die Verdrängungsvolumenregelung Hystereeffekte der Hydromaschine kompensiert. Die Verdrängungsvolumenregelung korrigiert das Soll-Verdrängungsvolumen, das als Eingangsgröße in die Regelung der Hydromaschine eingegeben wird laufend. So können die Hystereeffekte der Hydromaschine kompensiert werden.

Nach einem weiteren Merkmal der Erfindung wird die Verdrängungsvolumenregelung im Falle einer Limitierung der Betriebsgröße übersteuert. Im Falle der Limitierung der Betriebsgröße, beispielsweise bei einer Druckabschneidung, wird die Verdrängungsvolumenregelung übersteuert, um ein Aufziehen der Verdrängungsvolumenregelung zu verhindern.

Nach einem weiteren Merkmal der Erfindung wird der Schwenkwinkel der Hydromaschine basierend auf weiteren Vorgaben, insbesondere weiteren Parametern, limitiert. Das Verfahren kann so beispielsweise eine Schwenkwinkellimitierung auf Basis dieser Vorgaben (beispielsweise einer HMI-Eingabe/-Einstellung und/oder einer Funktion zur Realisierung einer Betriebsstrategie) umsetzen.

Die Aufgabe der Erfindung wird ferner durch eine Steuereinheit gelöst, die ein erfindungsgemäßes Verfahren, das gemäß wenigstens einem Aspekt der vorangegangenen Beschreibung ausgestaltet ist, ausführt.

Die Steuereinheit weist vorzugsweise drei Abschnitte auf: Als ersten Abschnitt eine Berechnungseinheit zur Berechnung des Soll-Verdrängungsvolumens aus dem Soll-Volumenstrom, insbesondere unter Berücksichtigung wenigstens einer der Einflüsse.

Als zweiten Abschnitt ein Verdrängungsvolumenregler, insbesondere Schwenkwinkelregler, der eine Abweichung zwischen dem Verdrängungsvolumen, das von der Berechnungseinheit berechnet wurde, und dem gemessenen Verdrängungsvolumen berechnet. Der Verdrängungsvolumenregler ist jedoch optional. Als dritten Abschnitt einen Pumpenregler, alternativ als Pumpentreiber bezeichnet, der das von der Berechnungseinheit und ggf. dem Verdrängungsvolumenregler berechnete/ vorgegebene Soll-Verdrängungsvolumen in einen Stellstrom bzw. Steuerstrom für die Hydraulikmaschine überführt.

Die Berechnungseinheit rechnet den vorgegebenen Soll-Volumenstrom in das Soll-Verdrängungsvolumen unter Berücksichtigung des wenigstens einen Einflusses um. Der (optionale) Verdrängungsvolumenregler korrigiert das berechnete Verdrängungsvolumen, indem er das berechneten Soll-Verdrängungsvolumen mit der Messgröße, vorzugsweise dem erfassten Schwenkwinkel abgleicht, und eine Regelabweichung ausregelt. Der Pumpenregler überführt das von der Berechnungseinheit berechnete bzw. das von dem Verdrängungsvolumenregler ggf. korrigierte Soll-Verdrängungsvolumen in den Stellstrom zur Ansteuerung der Hydromaschine.

Die Berechnungseinheit ist dabei dem optionalen Verdrängungsvolumenregler vorgelagert und ermöglicht dadurch eine Steuerung, durch die der angeforderte Volumenstrom (möglichst genau) bereitstellt wird. Hierbei können bei der Berechnung des Verdrängungsvolumens aus der Volumenstromvorgabe Störgrößen wie beispielsweise Leckageeinflüsse mitberücksichtigt und das Soll-Verdrängungsvolumen dementsprechend korrigiert werden. Die Höhe der zu kompensierenden Volumenstromabweichung kann beispielsweise in Abhängigkeit der aktuellen Pumpendrehzahl, des Pumpenwinkels und des Systemdrucks berechnet werden.

Die vorliegende Erfindung wird beispielsweise durch eine externe Ansteuerhardware, wie ein Steuergerät oder eine ECU und ein elektrisch verbundenes Ansteuergerät für die Hydraulikmaschine realisiert. Das Ansteuergerät ist dabei vorzugsweise ein elektrisch direktgesteuertes Druckregelventil, insbesondere Druckreduzierventil, über das beispielsweise ein Kolbenraum eines Stellzylinders mit Stelldruckmittel beaufschlagbar ist, von dem die oben genannte Schrägscheibe angelenkt ist.

Die Aufgabe der Erfindung wird ferner durch ein Computerprogramm gelöst, das dazu befähigt ist, ein Verfahren nach wenigstens einem Aspekt der vorangegangenen Beschreibung auszuführen.

Die Aufgabe der Erfindung wird schließlich durch ein maschinenlesbares Speichermedium gelöst, auf dem das Computerprogramm gespeichert ist.

Im Folgenden werden je ein Ausführungsbeispiel eines erfindungsgemäßen Verfahrens und einer erfindungsgemäßen Steuereinheit anhand der folgenden Figuren näher erläutert. Es zeigen:

Figur 1 eine schematische Darstellung einer erfindungsgemäßen elektronischen Steuereinheit für einen hydraulischen Antrieb, insbesondere für dessen Hydromaschine; und
Fig. 2 eine schematische Darstellung einer Berechnungseinheit der elektronischen Steuereinheit gemäß Figur 1.

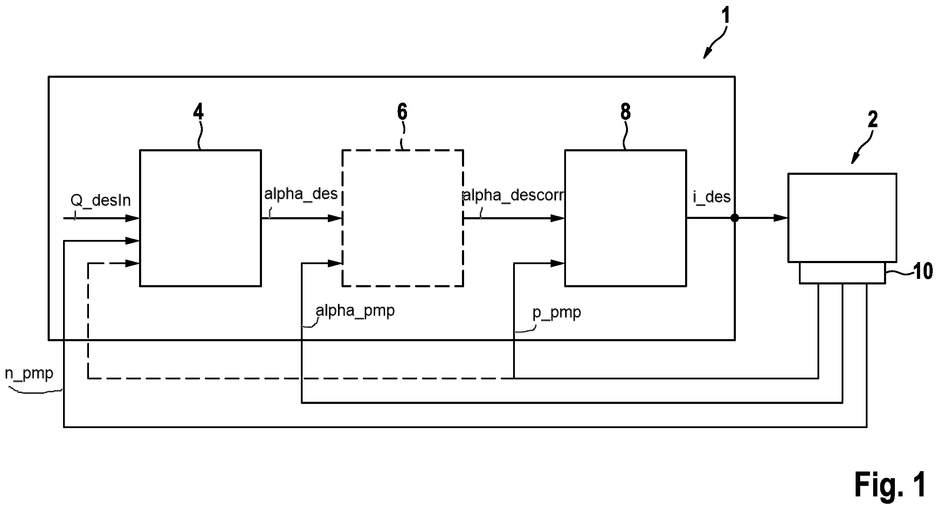

Fig. 1 zeigt eine schematische Darstellung einer erfindungsgemäßen, elektronischen Steuereinheit 1 für einen hydraulischen Antrieb, insbesondere für eine Hydromaschine 2 des Antriebes. Die Hydromaschine 2 ist mittels elektrischer Ansteuerung in ihrem Verdrängungsvolumen Vg verstellbar. Im gezeigten Ausführungsbeispiel ist sie als Axialkolbenmaschine in Schrägscheibenbauweise mit verschwenkbarer Schrägscheibe ausgestaltet. Die Verstellung des Verdrängungsvolumens erfolgt durch Verstellen seines mechanischen Äquivalents, des Schwenkwinkels alpha der Schrägscheibe. Im Folgenden bezieht sich daher die Beschreibung auf den Schwenkwinkel alpha. Die Schrägscheibe ist im Ausführungsbeispiel von einem Verstellzylinder angelenkt (nicht dargestellt), der über ein elektrisch direkt ansteuerbares Druckreduzierventil mit Druckmittel beaufschlagbar ist, was je nach Beaufschlagung die Verstellung, einen konstanten Schwenkwinkel oder die Rückstellung bewirkt. Der Stell- oder Ansteuerstrom i_des wird von der Steuereinheit 1 in Abhängigkeit eines Soll-Volumenstroms Q_desln ermittelt. Der Soll-Volumenstrom Q_desln ist dabei derjenige Volumenstrom, den die Hydromaschine 2 dem wenigstens einen von ihr mit Druckmittel versorgten, hydraulischen Verbraucher des Antriebes bereitstellen stellen muss, damit eine an den Verbraucher gerichtete Bewegungsanforderung erfüllt werden kann.

Gemäß Figur 1 weist die Steuereinheit 1 drei Abschnitte auf. Ein erster Abschnitt ist eine Berechnungseinheit 4, ein zweiter Abschnitt ist ein (optionaler) Verdrängungsvolumenregler 6 und ein dritter Abschnitt ist ein Pumpenregler 8. Die Berechnungseinheit 4 berechnet ein Soll-Verdrängungsvolumen aus dem erfassten, ermittelten oder anderweitig vorgegebenen Soll-Volumenstrom Q_desln. In Kenntnis der Kinematik der Schrägscheibe der Hydromaschine 2 berechnet sie daraus das mechanische Äquivalent zum Soll-Verdrängungsvolumen, den oben erwähnten Soll-Schwenkwinkel alpha_des. Der Berechnungseinheit 4 werden eine Ist-Drehzahl n_pmp und ein Ist-Druck p_pmp der Hydromaschine 2 von entsprechenden Sensoren 10 übermittelt. Die Berechnungseinheit 4 übergibt den berechneten Soll-Schwenkwinkel alpha_des an den optionalen Verdrängungsvolumenregler 6.

Der Verdrängungsvolumenregler 6 korrigiert den Soll-Schwenkwinkel alpha_des zum korrigierten Soll-Schwenkwinkel alpha_descorr. Hierzu geht in den Verdrängungsvolumenregler 6 eine Messgröße ein, die durch den Sensor 10 erfasst wird. Diese Messgröße ist im Ausführungsbeispiel der aktuelle Schwenkwinkel alpha_pmp der Hydromaschine 2. Für die Korrektur des Soll-Schwenkwinkels alpha_des regelt der Verdrängungsvolumenregler 6 somit die Abweichung zwischen dem errechneten Soll-Schwenkwinkel alpha_des und dem erfassten, aktuellen Schwenkwinkel alpha_pmp aus. Dabei ist der Soll-Schwenkwinkel alpha_des eine Führungsgröße der Verdrängungsvolumenregelung, der erfasste Schwenkwinkel alpha_pmp ist die Rückführgröße dieser Regelung. Der Verdrängungsvolumenregler 6 übergibt den korrigierten Soll-Schwenkwinkel alpha_descorr in Folge als eine Eingangsgröße an den Pumpenregler 8.

Ohne den vorbeschriebenen Verdrängungsvolumenregler 6, wie erwähnt ist dieser optional, wird das Verdrängungsvolumen/der Schwenkwinkel alpha lediglich gesteuert. Hintergrund für die Verwendung des Verdrängungsvolumenreglers 6 ist, dass bei einigen Anwendungen eine alleinige Steuerung des Schwenkwinkels nicht ausreichend genau ist. Der in den Verdrängungsvolumenregler 6 eingehende Soll-Schwenkwinkel alpha_des kann entweder aus Ansteuersignalen ermittelt werden oder er wird in der Berechnungseinheit 4 berechnet. Dabei kann das Signal des eingehenden Soll-Schwenkwinkels alpha_des, wenn nötig, zunächst gefiltert werden. Abweichungen zum erfassten Schwenkwinkel alpha_pmp werden über den vorzugsweise als PID-Regler ausgestalteten Verdrängungsvolumenregler 6 ausgeregelt.

Eine beinhaltete Anti-Windup Funktion verhindert ein Aufziehen des Verdrängungsvolumenreglers 6 und somit eine Beeinträchtigung der Pumpenansteuerung durch den Verdrängungsvolumenregler 6 und kann verschiedene Szenarien zur automatischen Aktivierung enthalten. Beispielhaft ist eine Aktivierung im Falle einer Druckabschneidung möglich. Hierbei kann der Beginn der Druckabschneidung, wenn also ein Zurückschwenken der Hydromaschine 2 angesteuert wird, weil beispielsweise eine Parametergrenze der Hydromaschine 2 erreicht wurde, und das Verlassen der Druckabschneidung (erneutes Ausschwenken der Hydromaschine 2 bis zum Soll-Schwenkwinkel) jeweils erkannt und für beide Fälle eine jeweilige zulässige Abweichung zum Soll-Schwenkwinkel parametriert werden. Über die zulässigen Abweichungen und die Erkennung des Zurück- und Ausschwenkens der Hydromaschine 2 kann die (De)aktivierung des Anti-Windup separat eingestellt werden.

Die Anti-Windup Funktion kann auch durch eine hohe Abweichung zwischen dem Soll-Schwenkwinkel alpha_des und dem erfassten Schwenkwinkel alpha_pmp aktiviert werden. Die Höhe der Abweichung ist dabei mittels einem Parameter einstellbar.

Der so korrigierte Soll-Schwenkwinkel alpha_descorr ist eine Eingangsgröße des Pumpenreglers 8. Dieser hat die Aufgabe, den korrigierten Soll-Schwenkwinkel alpha_descorr (oder im Falle ohne Verdrängungsvolumenregler 6 den Soll-Schwenkwinkel alpha_des) in einen Soll-Strom i_des zur Ansteuerung der Hydromaschine 2 zu überführen. Der Pumpenregler 8 rechnet dazu den korrigierten Soll-Schwenkwinkel alpha_descorr in eine korrespondierende Betriebsgröße um, die einfach erfassbar ist. Hierzu bietet sich der Druck p der Hydromaschine 2 an, der sich ausreichend proportional zur Änderung des Schwenkwinkels ändert. Über die Sensoreinheit 10 wird der aktuelle Druck p als Messgröße p_pmp erfasst und auf den Pumpenregler 8 zur Regelung des Drucks p zurückgeführt, sofern das Verdrängungsvolumen/der Schwenkwinkel alpha gesteuert wird.

Wenn der Schwenkwinkel alpha geregelt wird, wird die Betriebsgröße - der Druck p - hingegen nicht fortwährend geregelt, sondern lediglich bei Bedarf limitiert oder "abgeschnitten".

Der Pumpenregler 8 überführt den intern aus dem korrigierten Soll-Schwenkwinkel alpha_descorr berechneten Soll-Druck in den Soll-Strom i_des, mit dem das weiter oben beschriebene Druckreduzierventil der Hydromaschine 2 angesteuert wird. Die daraus resultierende Beaufschlagung des Verstellzylinders mit Druckmittel führt zur Verstellung der Schrägscheibe, in Folge des Schwenkwinkels alpha und damit des Verdrängungsvolumens.

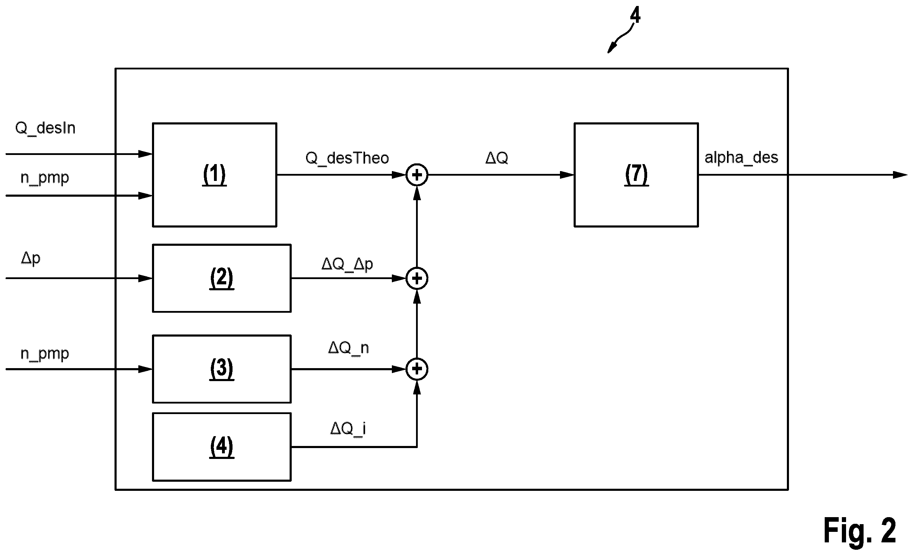

Fig. 2 zeigt eine schematische Darstellung der Berechnungseinheit 4. Die Berechnungseinheit 4 berechnet das Soll-Verdrängungsvolumen aus dem Soll-Volumenstrom Q_desIn. Dazu weist die Berechnungseinheit 4 eine Anzahl an Eingängen auf. Der Soll-Volumenstrom O_desIn resultiert wie weiter oben erwähnt, aus der Volumenstrom-Anforderung des oder der mit Druckmittel zu versorgenden hydraulischen Verbraucher. Die Pumpendrehzahl n_pmp und der Druck p_pmp werden durch die Sensoren 10 erfasst. Aus dem Soll-Volumenstrom Q_desIn und der Pumpendrehzahl n_pmp wird ein theoretischer Soll-Volumenstrom Q_desTheo berechnet (Formel (1)). Unter Verwendung der Druckdifferenz $\Delta$p über die Hydromaschine 2 - dem sogenannten Systemdruck - wird eine hochdruckabhängige Volumenstromabweichung $\Delta$Q_$\Delta$p berechnet (Formel (2)). Eine drehzahlabhängige Volumenstromabweichung $\Delta$Q_n wird unter Verwendung der Pumpendrehzahl n_pmp berechnet (Formel (3)). Weitere Volumenstromabweichungen werden berechnet (4). Dabei kann die Berechnung der weiteren Volumenstromabweichungen durch den Einsatz von Kennlinien oder Messungen oder auf Basis von Erfahrungswerten erfolgen. Ein Beispiel für eine der weiteren Volumenstromabweichungen kann eine schwenkwinkelabhängige Volumenstromänderung sein (Formel (4)).

Die Gesamtabweichung $\Delta$Q wird als Summe aus einem von der drehzahlabhängigen Volumenstromabweichung $\Delta$Q_n und der schwenkwinkelabhängigen Volumenstromabweichung $\Delta$Q_alpha gebildeten Produkt und der hochdruckabhängigen Volumenstromabweichung $\Delta$Q_$\Delta$p berechnet. Aus der Summe des theoretischen Soll-Volumenstroms Q_desTheo und der Gesamtabweichungen $\Delta$Q wird der korrigierte Soll-Volumenstrom Q_desOut berechnet. Dieser Q_desOut wird von der Berechnungseinheit 4 in das Soll-Verdrängungsvolumen, beziehungsweise den Soll-Schwenkwinkel alpha_des umgerechnet (Formel (7)). Dieser wird von der Berechnungseinheit 4 an den Verdrängungsvolumenregler 6 oder falls dieser nicht vorgesehen ist, an den Pumpenregler 8 ausgegeben und fungiert für beide als eine Eingangsgröße.

Die Umrechnung des Soll-Volumenstroms Q_desln in das mechanische Äquivalent des Soll-Verdrängungsvolumens, den Soll-Schwenkwinkel alpha_des, ist nachfolgend detailliert beschrieben.

Der vorgegebene Soll-Volumenstrom wird unter Berücksichtigung einer nicht vermeidbaren Volumenstromabweichung, die durch äußere Einflüsse oder variierende Betriebspunkte verursacht werden kann, in das Soll-Verdrängungsvolumen umgerechnet. Dazu werden die aktuelle Pumpendrehzahl und der Systemdruck durch Sensoren erfasst.

Zur Berechnung des Soll-Verdrängungsvolumens aus dem Soll-Volumenstrom muss zunächst ein theoretischer Volumenstrom aus der Soll-Volumenstromvorgabe *Q_desln* ohne Berücksichtigung möglicher Abweichungen berechnet werden. Die Berechnung des theoretischen Volumenstroms *Q_desTheo* kann unter Verwendung der aktuellen Pumpendrehzahl *n_pmp* und eines maximalen Pumpenfördervolumens *Vg_pmpMax* folgendermaßen umgesetzt werden:

$$Q\_desTheo = Q\_desln * n\_pmp * Vg\_pmpMax \qquad (1)$$

Die Höhe der Volumenstromabweichungen hängt von verschiedenen Größen ab, die unter anderem folgende sind:

- Änderung des Systemdrucks
- Änderung der Pumpendrehzahl
- Änderung des Pumpenschwenkwinkels
- Änderung des Volumenstrombedarfs der Verbraucher, die der hydraulischen Pumpe nachgelagert sind
- Änderung der Temperatur
- Änderung des Luftdrucks

Um den gewünschten, von dem theoretischen Volumenstrom abweichenden Soll-Volumenstrom zu erhalten, müssen die vorstehend aufgeführten Einflüsse mit einberechnet/korrigiert werden. Je nach erforderlicher Steuergenauigkeit, Rechenaufwand und Verfügbarkeit von Daten können verschiedene mathematische oder datenbasierte Ansätze zur Kompensation gewählt werden. Für einige Einflussfaktoren können beispielsweise folgende Ansätze gewählt werden:

Eine hochdruckabhängige Volumenstromabweichung $dQ\_\Delta p$ wird unter Verwendung eines spezifischen Faktors zur Druckkompensation $Fac\_\Delta p$, des aktuellen Systemdifferenzdruckes $\Delta p$ und eines spezifischen Offsets zur Druckkompensation $Off\_\Delta p$ berechnet:

$$\Delta Q\_\Delta p = Fac\_\Delta p * \Delta p + Off\_\Delta p \qquad (2)$$

Dieser Einfluss liefert den Kern der Volumenstromkompensation, wobei nachfolgend noch weitere Kompensationsmöglichkeiten beschrieben sind.

Eine drehzahlabhängige Volumenstromabweichung $\Delta Q\_n$ wird unter Verwendung eines spezifischen Faktors zur Drehzahlkompensation $Fac\_n$, der aktuellen Pumpendrehzahl $n\_pmp$ und eines spezifischen Offsets zur Drehzahlkompensation $Off\_n$ berechnet:

$$\Delta Q\_n = Fac\_n * n\_pmp + Off\_n \qquad (3)$$

Eine schwenkwinkelabhängige Volumenstromabweichung $\Delta Q\_alpha$ wird unter Verwendung des berechneten theoretischen Volumenstroms $Q\_desTheo$ (1) und eines spezifischen Faktors zur Schwenkwinkelkompensation $Fac\_alpha$ berechnet:

$$\Delta Q\_alpha = arctan(Q\_desTheo * Fac\_alpha) / (\pi/2) \quad (4)$$

Mittels dieser Funktion kann ein stetiger Übergang von einer Kompensation von 0 l/min bei einem Schwenkwinkel von 0° zu einer Kompensationskennlinie, welche nicht durch den Nullpunkt verläuft, ermöglicht werden. Über den Faktor zur Schwenkwinkelkompensation $Fac\_alpha$ kann die Übergangszeit der Kompensation von 0 l/min bis hin zu der Kennlinie verkürzt bzw. verlängert werden.

Aus den einzelnen Volumenstromabweichungen (2), (3) und (4) kann wie folgt eine Gesamtabweichung $\Delta Q$ berechnet werden:

$$\Delta Q = \Delta Q\_\Delta p + \Delta Q\_n * \Delta Q\_alpha \qquad (5)$$

Aus der Gesamtabweichung (5) und dem theoretischen Volumenstrom (1) kann ein modifizierter Soll-Volumenstrom $Q\_desOut$ berechnet werden, dessen aus der hydraulischen Pumpe ausgehenden Anteil dann dem geforderten Soll-Volumenstrom entspricht:

$$Q\_desOut = Q\_desTheo + \Delta Q \qquad (6)$$

Der modifizierte Soll-Volumenstrom $Q\_desOut$ kann mittels der aktuellen Pumpendrehzahl $n\_pmp$ und eines maximalen Pumpenfördervolumens $Vg\_pmpMax$ in einen modifizierten Pumpensollschwenkwinkel $alpha\_des$ umgerechnet werden:

$$alpha\_des = Q\_desOut / (n\_pmp * Vg\_pmpMax) \qquad (7)$$

Die zuvor beschriebenen Faktoren und Offsets zur mathematischen Beschreibung der jeweiligen Abweichungen können durch verschiedene Methoden ermittelt werden, wie beispielsweise einer Vermessung an einem Versuchsträger, einer Vermessung am Prüfstand oder einer Abschätzung auf Basis von Erfahrungswerten.

Die Genauigkeit der Kompensation des von dem Soll-Volumenstrom abweichenden Volumenstroms kann noch weiter erhöht werden, indem für die druck-, drehzahl- oder schwenkwinkelabhängige Kompensation nichtlineare Modelle verwendet werden. Ferner lässt sich die Genauigkeit des Systemverhaltens im Bezug zur Sollwertvorgabe mittels Berücksichtigung der Leckage des Hydromotors bzw. mehrerer Hydromotoren noch weiter verbessern.

Das grundlegende Funktionsprinzip eines zweiten Ausführungsform ist identisch mit der ersten Ausführungsform. Der Unterschied ist allerdings, dass der optionale Verdrängungsvolumenregler 6 der ersten Ausführungsform gemäß Figur 1 fehlt (gestrichelt dargestellt). Das heißt, das berechnete Verdrängungsvolumen wird ohne Korrektur von der Berechnungseinheit 4 zu dem Pumpenregler 8 übertragen. Das von der Berechnungseinheit 4 berechnete Ver-

## EP 4 402 371 B1

drängungsvolumen ist somit die Führungsgröße des Pumpenreglers 8.

Der hydraulische Antrieb kann beispielsweise in einem Winden- oder Fahrantrieb angewendet werden.

**Patentansprüche**

1. Verfahren zum Betreiben eines hydraulischen Antriebs, der wenigstens eine Hydromaschine (2) mit verstellbarem Verdrängungsvolumen hat, die zur Druckmittelversorgung wenigstens eines hydraulischen Verbrauchers, orientiert an dessen Last, elektronisch regelbar ist, mit den Schritten:

   - Erfassen einer Ist-Drehzahl (n_pmp) und eines Soll-Volumenstroms (Q_desIn), jeweils der Hydromaschine (2);
   - Berechnen eines Soll-Verdrängungsvolumens der Hydromaschine (2), oder eines mechanischen Soll-Äquivalents (alpha_des) dessen, in Abhängigkeit der Ist-Drehzahl (n_pmp) und des Soll-Volumenstroms (Q_desIn);

   und, in Abhängigkeit des Soll-Verdrängungsvolumens oder mechanischen Soll-Äquivalents (alpha_des), sowie wenigstens eines Parameters des hydraulischen Antriebes oder wenigstens einer Messgröße (alpha_pmp, p_pmp) des hydraulischen Antriebes, wahlweise:

   - Regeln des Verdrängungsvolumens oder Äquivalents (alpha) gemäß dem Soll-Verdrängungsvolumen oder mechanischen Soll-Äquivalent (alpha_des) und Limitieren einer Betriebsgröße der Hydromaschine (2) in Abhängigkeit des wenigstens einen Parameters,
   oder
   - Steuern des Verdrängungsvolumens oder Äquivalents (alpha) gemäß dem Soll-Verdrängungsvolumen oder mechanischen Soll-Äquivalent (alpha_des) und Regeln einer Betriebsgröße (p) der Hydromaschine (2) in Abhängigkeit der wenigstens einen Messgröße (p_pmp), wobei die Betriebsgröße ein Druck (p) der Hydromaschine (2) oder ein Differenzdruck ($\Delta$p) über die Hydromaschine (2) ist.

2. Verfahren nach Anspruch 1, wobei das Soll-Verdrängungsvolumen oder mechanische Soll-Äquivalent (alpha_des) in einen Sollwert (p_des) der Betriebsgröße (p) umgerechnet wird.

3. Verfahren nach einem der Ansprüche 1 bis 2, wobei das Berechnen des Soll-Verdrängungsvolumens oder mechanischen Soll-Äquivalents (alpha_des), in Abhängigkeit des Soll-Volumenstroms (Q_desIn) und der Ist-Drehzahl (n_pmp) Schritte

   - Berechnen eines theoretischen Volumenstroms (Q_desTheo) in Abhängigkeit des Soll-Volumenstroms (Q_desIn), der Ist-Drehzahl (n_pmp) und einem maximalen Pumpenfördervolumen (Vg_pmpMax);
   - Berechnen einer Gesamtabweichung ($\Delta$Q) vom theoretischen Volumenstrom (Q_desTheo) in Abhängigkeit wenigstens einer auf den Volumenstrom (Q) wirkenden Einflussgröße (p, $\Delta$p, n_pmp, alpha, Q_V, T, p_L);
   - Berechnen eines modifizierten Soll-Volumenstroms (Q_desOut) in Abhängigkeit des theoretischen Volumenstroms (Q_desTheo) und der Gesamtabweichung ($\Delta$Q); und
   - Berechnen eines modifizierten Soll-Verdrängungsvolumens oder modifizierten Soll-äquivalents (alpha_descorr) in Abhängigkeit des modifizierten Soll-Volumenstroms (Q_desOut), der Ist-Drehzahl (n_pmp) und des maximalen Pumpenfördervolumens (Vg_pmpMax)

   umfasst.

4. Verfahren nach Anspruch 3, wobei zu den Einflussgrößen wenigstens eine aus dem Druck (p), einem Differenzdruck ($\Delta$p), der Drehzahl (n_pmp), des Verdrängungsvolumens oder Äquivalents (alpha), eines angeforderten Volumenstrombedarfs (Q_V) des wenigstens einen Verbrauchers, einer Temperatur des Druckmittels (T) oder einem Luftdruck (p_L) zählen.

5. Verfahren zumindest nach Anspruch 3, wobei das Soll-Verdrängungsvolumen oder dessen mechanisches Soll-Äquivalent (alpha_des) oder das modifizierte Soll-Verdrängungsvolumen oder das modifizierte Soll-Äquivalent (alpha_descorr) in Abhängigkeit einer erfassten Messgröße (alpha_pmp) korrigiert wird.

6. Verfahren nach Anspruch 5, wobei über eine innere Regelschleife die Betriebsgröße (p) regelbar ist und über eine äußere Regelschleife das Verdrängungsvolumen oder dessen Äquivalent (alpha) regelbar ist, wobei die beiden Regelschleifen eine Kaskadenregelung bilden.

9

7. Verfahren nach einem der vorhergehenden Ansprüche, wobei zwischen einem Betriebsmodus mit dem Regeln der Betriebsgröße (p) und einem weiteren Betriebsmodus mit dem Regeln des Verdrängungsvolumens oder Äquivalents (alpha) umgeschaltet wird.

8. Verfahren nach einem der vorhergehenden Ansprüche, wobei über die Regelung des Verdrängungsvolumens oder Äquivalents (alpha) ein Hystereseeffekt der Hydromaschine (2) kompensiert wird.

9. Verfahren nach einem der vorhergehenden Ansprüche, wobei die Regelung des Verdrängungsvolumens oder Äquivalents (alpha) im Falle der Limitierung der Betriebsgröße (p) übersteuert wird oder zumindest übersteuert werden kann.

10. Steuereinheit (1), die dazu eingerichtet ist, ein Verfahren nach einem der vorstehenden Ansprüche durchzuführen, zumindest mit einer Berechnungseinheit (4) zum Berechnen des Soll-Verdrängungsvolumens oder Soll-Äquivalents (alpha_des) in Abhängigkeit des Soll-Volumenstroms (Q_desln) und der Ist-Drehzahl (n_pmp) und einem Pumpenregler (8) zum Ansteuern der Hydromaschine (2) in Abhängigkeit des berechneten Soll-Verdrängungsvolumens oder Soll-Äquivalents (alpha_des).

11. Steuereinheit (1) nach Anspruch 10, mit einem Verdrängungsvolumen-, Äquivalenten- oder Schwenkwinkel-Regler (6) zum Korrigieren des berechneten Soll-Verdrängungsvolumens, Soll-Äquivalents oder Soll-Schwenkwinkels (alpha_des) in Abhängigkeit des erfassten Verdrängungsvolumens, Äquivalents oder Schwenkwinkels (alpha_pmp).

12. Computerprogramm, um einen Prozessor mit Hardware zu den Schritten nach Anspruch 1 zu veranlassen.

13. Maschinenlesbares Speichermedium mit einem mit einem darauf gespeicherten Computerprogramm nach Anspruch 12.

**Claims**

1. Method for operating a hydraulic drive having at least one hydraulic machine (2) with an adjustable displacement volume which, in order to supply pressure medium to at least one hydraulic consumer, can be electronically regulated in a manner oriented to the load thereof, having the steps of:

   - capturing an actual speed (n_pmp) and a target volume flow (Q_desln) of the hydraulic machine (2) in each case;
   - calculating a target displacement volume of the hydraulic machine (2) or a mechanical target equivalent (alpha_des) thereof on the basis of the actual speed (n_pmp) and the target volume flow (Q_desln);

   and, on the basis of the target displacement volume or mechanical target equivalent (alpha_des) and at least one parameter of the hydraulic drive or at least one measurement variable (alpha_pmp, p_pmp) of the hydraulic drive, either:

   - regulating the displacement volume or equivalent (alpha) according to the target displacement volume or mechanical target equivalent (alpha_des) and limiting an operating variable of the hydraulic machine (2) on the basis of the at least one parameter,
   or
   - controlling the displacement volume or equivalent (alpha) according to the target displacement volume or mechanical target equivalent (alpha_des) and regulating an operating variable (p) of the hydraulic machine (2) on the basis of the at least one measurement variable (p_pmp), wherein the operating variable is a pressure (p) of the hydraulic machine (2) or a differential pressure ($\Delta$p) over the hydraulic machine (2).

2. Method according to Claim 1, wherein the target displacement volume or mechanical target equivalent (alpha_des) is converted into a target value (p_des) of the operating variable (p).

3. Method according to one of Claims 1 to 2, wherein the calculation of the target displacement volume or mechanical target equivalent (alpha_des) on the basis of the target volume flow (Q_desln) and the actual speed (n_pmp) comprises steps of

   - calculating a theoretical volume flow (Q_desTheo) on the basis of the target volume flow (Q_desln), the actual speed (n_pmp) and a maximum pump delivery volume (Vg_pmpMax);
- calculating a total deviation (ΔQ) from the theoretical volume flow (Q_desTheo) on the basis of at least one influencing variable (p, Δp, n_pmp, alpha, Q_V, T, p_L) acting on the volume flow (Q);
- calculating a modified target volume flow (Q_desOut) on the basis of the theoretical volume flow (Q_desTheo) and the total deviation (ΔQ); and
- calculating a modified target displacement volume or modified target equivalent (alpha_descorr) on the basis of the modified target volume flow (Q_desOut), the actual speed (n_pmp) and the maximum pump delivery volume (Vg_pmpMax).

4. Method according to Claim 3, wherein the influencing variables include at least one from the pressure (p), a differential pressure (Δp), the speed (n_pmp), the displacement volume or equivalent (alpha), a requested volume flow requirement (Q_V) of the at least one consumer, a temperature of the pressure medium (T) or an air pressure (p_L).

5. Method at least according to Claim 3, wherein the target displacement volume or its mechanical target equivalent (alpha_des) or the modified target displacement volume or the modified target equivalent (alpha_descorr) is corrected on the basis of a captured measurement variable (alpha_pmp).

6. Method according to Claim 5, wherein the operating variable (p) can be regulated via an internal control loop and the displacement volume or its equivalent (alpha) can be regulated via an external control loop, wherein the two control loops form cascade regulation.

7. Method according to one of the preceding claims, wherein there is a switch between an operating mode with the regulation of the operating variable (p) and a further operating mode with the regulation of the displacement volume or equivalent (alpha).

8. Method according to one of the preceding claims, wherein a hysteresis effect of the hydraulic machine (2) is compensated for by regulating the displacement volume or equivalent (alpha).

9. Method according to one of the preceding claims, wherein the regulation of the displacement volume or equivalent (alpha) is overridden or can be at least overridden when limiting the operating variable (p).

10. Control unit (1) which is configured to carry out a method according to one of the preceding claims, at least having a calculation unit (4) for calculating the target displacement volume or target equivalent (alpha_des) on the basis of the target volume flow (Q_desIn) and the actual speed (n_pmp), and having a pump regulator (8) for controlling the hydraulic machine (2) on the basis of the calculated target displacement volume or target equivalent (alpha_des).

11. Control unit (1) according to Claim 10, having a displacement volume, equivalent or pivot angle regulator (6) for correcting the calculated target displacement volume, target equivalent or target pivot angle (alpha_des) on the basis of the captured displacement volume, equivalent or pivot angle (alpha_pmp).

12. Computer program for prompting a processor with hardware to carry out the steps according to Claim 1.

13. Machine-readable storage medium with a computer program according to Claim 12 stored thereon.

**Revendications**

1. Procédé de fonctionnement d'un entraînement hydraulique qui comporte au moins une machine hydraulique (2) comprenant un volume de déplacement réglable qui, afin de fournir un fluide sous pression à au moins un récepteur hydraulique, peut être commandée électroniquement d'une manière orientée selon sa charge, comprenant les étapes consistant à :

- détecter une vitesse de rotation réelle (n_pmp) et un débit volumique cible (Q_desIn), dans chaque cas de la machine hydraulique (2) ;
- calculer un volume de déplacement cible de la machine hydraulique (2) ou un équivalent mécanique cible (alpha_des) de celui-ci en fonction de la vitesse de rotation réelle (n_pmp) et du débit volumique cible (Q_desIn) ;
- et, en fonction du volume de déplacement cible ou de l'équivalent mécanique cible (alpha_des) et d'au moins un paramètre de l'entraînement hydraulique ou d'au moins une grandeur de mesure (alpha_pmp, p_pmp) de l'entraînement hydraulique, soit :

- réguler le volume de déplacement ou l'équivalent (alpha) conformément au volume de déplacement cible ou à l'équivalent mécanique cible (alpha_des) et limiter une grandeur de fonctionnement de la machine hydraulique (2) en fonction dudit au moins un paramètre,
soit
- commander le volume de déplacement ou l'équivalent (alpha) conformément au volume de déplacement cible ou à l'équivalent mécanique cible (alpha_des) et réguler une grandeur de fonctionnement (p) de la machine hydraulique (2) en fonction de ladite au moins une grandeur de mesure (p_pmp), la grandeur de fonctionnement étant une pression (p) de la machine hydraulique (2) ou une pression différentielle ($\Delta$p) à travers la machine hydraulique (2).

2.  Procédé selon la revendication 1, dans lequel le volume de déplacement cible ou l'équivalent mécanique cible (alpha_des) est converti en une valeur cible (p_des) de la grandeur de fonctionnement (p).

3.  Procédé selon l'une des revendications 1 à 2, dans lequel le calcul du volume de déplacement cible ou de l'équivalent mécanique cible (alpha_des) en fonction du débit volumique cible (Q_desIn) et de la vitesse de rotation réelle (n_pmp) comprend les étapes consistant à

- calculer un débit volumique théorique (Q_desTheo) en fonction du débit volumique cible (Q_desIn), de la vitesse de rotation réelle (n_pmp) et d'un volume de refoulement maximal de pompe (Vg_pmpMax) ;
- calculer un écart total ($\Delta$Q) par rapport au débit volumique théorique (Q_desTheo) en fonction d'au moins une grandeur d'influence (p, $\Delta$p, n_pmp, alpha, Q_V, T, p_L) agissant sur le débit volumique (Q) ;
- calculer un débit volumique cible modifié (Q_desOut) en fonction du débit volumique théorique (Q_desTheo) et de l'écart total ($\Delta$Q) ; et
- calculer un volume de déplacement cible modifié ou un équivalent cible modifié (alpha_descorr) en fonction du débit volumique cible modifié (Q_desOut), de la vitesse de rotation réelle (n_pmp) et du volume de refoulement maximal de pompe (Vg_pmpMax).

umfasst.

4.  Procédé selon la revendication 3, dans lequel les grandeurs d'influence comprennent au moins l'un parmi la pression (p), une pression différentielle ($\Delta$p), la vitesse de rotation (n_pmp), le volume de déplacement ou l'équivalent (alpha), un besoin en débit volumique demandé (Q_V) dudit au moins un récepteur, une température du fluide sous pression (T) ou une pression atmosphérique (p_L).

5.  Procédé au moins selon la revendication 3, dans lequel le volume de déplacement cible ou son équivalent mécanique cible (alpha_des) ou le volume de déplacement cible modifié ou l'équivalent cible modifié (alpha_descorr) est corrigé en fonction d'une grandeur de mesure identifiée (alpha_pmp).

6.  Procédé selon la revendication 5, dans lequel la grandeur de fonctionnement (p) peut être régulée par l'intermédiaire d'une boucle de régulation interne et le volume de déplacement ou son équivalent (alpha) peut être régulé par l'intermédiaire d'une boucle de régulation externe, les deux boucles de régulation formant une régulation en cascade.

7.  Procédé selon l'une des revendications précédentes, dans lequel un basculement est effectué entre un mode de fonctionnement avec régulation de la grandeur de fonctionnement (p) et un autre mode de fonctionnement avec régulation du volume de déplacement ou de l'équivalent (alpha).

8.  Procédé selon l'une des revendications précédentes, dans lequel un effet d'hystérésis de la machine hydraulique (2) est compensé par régulation du volume de déplacement ou de l'équivalent (alpha).

9.  Procédé selon l'une des revendications précédentes, dans lequel la régulation du volume de déplacement ou de l'équivalent (alpha) est ou peut être surchargée en cas de limitation de la grandeur de fonctionnement (p).

10. Unité de commande (1) qui est configurée pour mettre en œuvre un procédé selon l'une des revendications précédentes, comprenant au moins une unité de calcul (4) pour calculer le volume de déplacement cible ou l'équivalent cible (alpha_des) en fonction du débit volumique cible (Q_desIn) et de la vitesse de rotation réelle (n_pmp) et un régulateur de pompe (8) pour commander la machine hydraulique (2) en fonction du volume de déplacement cible ou de l'équivalent cible (alpha_des) calculé.

11. Unité de commande (1) selon la revendication 10, comprenant un régulateur de volume de déplacement, d'équivalent ou d'angle de pivotement (6) pour corriger l'équivalent cible ou l'angle de pivotement cible (alpha_des) calculé en fonction du volume de déplacement, de l'équivalent ou de l'angle de pivotement (alpha_pmp) détecté, le volume de déplacement cible.

12. Programme informatique destiné à amener un processeur comportant un matériel à mettre en œuvre les étapes selon la revendication 1.

13. Support de stockage lisible par machine sur lequel est enregistré un programme informatique selon la revendication 12.

**Fig. 1**

14

Fig. 2

**IN DER BESCHREIBUNG AUFGEFÜHRTE DOKUMENTE**

**In der Beschreibung aufgeführte Patentdokumente**

- DE 102015207258 A1
- DE 102013213896 A1
- DE 102013217708 A1
- DE 102019210003 A1
- DE 102012020632